# EUROPÄISCHE PATENTSCHRIFT

(11) **EP 3 049 825 B1**
(45) Veröffentlichungstag und Bekanntmachung des Hinweises auf die Patenterteilung: **27.02.2019**
(21) Anmeldenummer: 14793439.2
(22) Anmeldetag: 24.09.2014
(51) Int. Cl.: G01S 19/48, G01S 19/49, G01S 7/41, G01S 13/86, G01S 13/87, G01S 5/02

(54) **POSITIONSBESTIMMUNG EINES FAHRZEUGS AUF ODER ÜBER EINER PLANETENOBERFLÄCHE**
DETERMINATION OF THE POSITION OF A VEHICLE ON OR ABOVE A PLANET SURFACE
DÉTERMINATION DE LA POSITION D'UN VÉHICULE SUR OU AU-DESSUS D'UNE SURFACE DE PLANÈTE

(30) Priorität: 25.09.2013 DE 102013015892
(43) Veröffentlichungstag der Anmeldung: 03.08.2016
(73) Patentinhaber: Deutsches Zentrum für Luft- und Raumfahrt e.V., 51147 Köln (DE)
(72) Erfinder: RUNGE, Hartmut, 81377 München (DE); KLARNER, Robert, 80331 München (DE)
(74) Vertreter: Rösler, Frank
(86) Internationale Anmeldenummer: PCT/DE2014/100340
(87) Internationale Veröffentlichungsnummer: WO 2015/043579

(56) Entgegenhaltungen:
- EP-A1- 1 860 456
- EP-A1- 2 211 144
- WO-A1-97/43665
- US-A- 5 661 486
- US-B1- 6 512 976

## Beschreibung

Die Erfindung betrifft eine Vorrichtung und ein Verfahren zur Positionsbestimmung eines Fahrzeugs auf oder über einer Planetenoberfläche, insbesondere in einem Verkehrswegenetz auf der Planetenoberfläche. Unter dem Begriff "Fahrzeuge" werden vorliegend Flugzeuge, Schienenfahrzeuge, Schiffe, und insbesondere Kraftfahrzeuge (PKW, LKW, Busse etc.) verstanden.

Es ist bekannt, dass heutige Fahrzeuge zu Navigationszwecken mit satellitenbasierten und/oder trägheitsbasierten Positionsermittlungssystemen ausgestattet sind.

Satellitenbasierte globale Navigationssysteme (englisch Global Navigation Satellite System) oder GNSS sind Systeme zur Positionsbestimmung und Navigation auf der Erde, in der Luft, oder im erdnahen Orbit durch den Empfang der Signale von Navigationssatelliten. GNSS ist ein Sammelbegriff für die Verwendung bestehender und künftiger globaler Satellitensysteme wie bspw. GPS (Global Positioning System), GLONASS (GLObal NAvigation Satellite System), GALILEO, oder COMPASS). Bekanntermaßen unterliegen die satellitenbasierten Positionsermittlungssysteme Fehlern (Satellitenpositionsfehler, Zeitdriftfehler, Iononsphärenfehler, Troposphärenfehler, Mehrwege-Effekt-Fehler), die zu Ungenauigkeiten bei der Ermittlung der Position führen. Diese Fehler können sich addieren und lassen eine Positionsermittlung nur mit einer Genauigkeit von 5 bis 150 m zu. Weiterhin ist bekannt, dass die Signale von Satellitenpositionsbestimmungssystemen durch Störsender gestört werden können.

Ein Trägheitsnavigationssystem (engl. Inertial Navigation System, kurz INS) ist ein Sensorsystem, mit dessen Hilfe die Messung von Bewegungen von im Raum frei beweglichen Körpern möglich ist. Das System verfügt, wie das zu überwachende Objekt auch, über insgesamt sechs kinematische Freiheitsgrade, davon drei translatorische sowie drei rotatorische, die sich an ebenfalls drei zueinander orthogonal stehenden Einheitsvektoren orientieren. Mit dieser Sensorik lässt sich das Körperkoordinatensystem in Echtzeit bestimmen und über eine kinematische Transformation mit einem feststehenden, vorher bekannten, Raumkoordinatensystem vergleichen, was eine Anwendung des INS als Navigationssystem ermöglicht. Dabei zählt es zu den Hauptvorteilen, dass dieses referenzlos betrieben werden kann, somit also unabhängig von jeglichen Ortungssignalen aus der Umgebung ist.

Der Begriff Trägheitsnavigation rührt daher, dass die zum Aufbau einer INS benötigten Beschleunigungs- und Drehratensensoren sämtliche Änderungen der Objektposition und - lage anhand auf intern verbaute, quantitativ bekannte, Massen (auch seismische Masse genannt) einwirkender Beschleunigungen bestimmen, was auf dem Prinzip der Massenträgheit beruht. Ein wesentlicher Nachteil des INS sind die vor allem bei sehr günstigen Sensoren stark vorhandene Sensordrift, deren Fehlereinfluss sich im Laufe einer Messung kumulativ verstärkt. In der Praxis koppelt man ein INS mit anderen Navigationssystemen. Beispielsweise liefert eine Kombination mit einem Global Positioning System (GPS) absolute Positionsangaben im Sekundenabstand, während das INS die Zwischenwerte interpoliert. Derartige kombinierte Positionsbestimmungssysteme findet man heute in Fahrzeugen und Flugzeugen. Auch Trägheitsbasierte Positionsbestimmungssysteme unterliegen Positionsfehlern (insbesondere basierend auf dem Driftfehler in Kombination mit bspw. den vorgenannten Fehlen bei GNSS-Systemen.

Die Trägheitsnavigation ist jedoch für den Masseneinsatz bspw. in PKW's zu teuer. Die GNSS Navigation arbeitet aufgrund von Abschattungen, Mehrfachempfang (Reflexionen, Multi-Path) und Störungen (unbewusst wie auch mittels Stör-Sendern beabsichtigt) des Empfangssignals nicht immer einwandfrei und verlässlich. Weiterhin sind auch bspw. die Straßen-Koordinaten in den verfügbaren Datensätzen (z. b. von TomTom und Nokia "HERE", ehem. Navteq) bei weitem nicht genau genug, um ein Fahrzeug bei autonomer Steuerung in der Spur zu halten und die Fahrsteuerung zu ermöglichen.

Weiterhin ist eine Positionsermittlung anhand optischer Landmarken mit Hilfe von prominenten und genau vermessenen Landmarken, wie z. b. Kirchturm-Spitzen, Masten und markanten Gebäuden bekannt. Vom Fahrzeug aus gemachte fotografische Aufnahmen bzw. Bild-Sequenzen werden dabei mit einer Umgebungs-Bilddatenbank verglichen, die Landmarken (Passpunkte) gefunden, die Winkel bestimmt, unter denen die Landmarken vom Fahrzeug aus gesehen werden, und mit Hilfe der bekannten Koordinaten der Passpunkte und Triangulation die Position des Fahrzeugs bestimmt. Dieses Verfahren funktioniert aber nur bei geeigneter Sicht. Eine Datenbank mit den Koordinaten von vom Fahrzeug aus visuell gut identifizierbarer Passpunkte existiert derzeit nicht.

Die Fahrzeug-Position durch GNSS-Ortung ist nicht genau genug und für sich allein nicht ausfallsicher und verbindlich genug. Hinzu kommt, dass die Straßendaten nicht präzise genug erfasst sind und die Objekte / Features zur genauen Referenzierung nicht enthalten. Für eine hochgenaue Fahrzeugführung, bspw. bei künftigen autonom gesteuerten PKWs, Flugzeugen, Schiffen, Schienenfahrzeugen ist die robuste Bestimmung der aktuellen Fahrzeugposition mit einer hohen Positionsgenauigkeit erforderlich. So benötigen insbesondere Fahrer-Assistenz-Systeme zur automatischen Spurhaltung bei sich autonom bewegenden Kraftfahrzeugen eine mehrfach redundante und abgesicherte Sensorik zur hochgenauen Positionsermittlung in Echtzeit.

Zur Positionsbestimmung von Luftfahrzeugen sind eine Reihe von Veröffentlichungen bekannt. Vergleiche hierzu beispielsweise: EP 2 211 144 A1, US 5,661,486 A, WO 97/43665, EP 1 860 456 A1 oder US 6,512,976 B1.

Die Aufgabe der Erfindung ist es eine Vorrichtung und ein Verfahren zur verbesserten Positionsbestimmung eines Fahrzeugs, das sich auf der Erdoberfläche in einem Verkehrswegenetz bewegt, anzugeben
Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein vorrichtungsgemäßer Aspekt der Aufgabe ist mit einer Vorrichtung zur Positionsbestimmung eines Fahrzeugs, das sich auf der Erdoberfläche in einem Verkehrswegenetz bewegt, gelöst. Unter dem Begriff "Verkehrswegenetz" wird vorliegend insbesondere ein Straßenverkehrsnetz oder ein Schifffahrtswegenetz verstanden.

Die vorgeschlagene Vorrichtung umfasst ein erstes Mittel zur Bestimmung einer ersten Position P1(t) des Fahrzeugs, ein zweites Mittel zur Bestimmung einer Bewegungsrichtung BR(t) des Fahrzeugs, ein drittes Mittel zur Bereitstellung einer Anzahl n von Fixpunktdaten, wobei die Fixpunktdaten zumindest für auf der Erdnoberfläche ortsfest angeordnete signifikante Radarobjekte FROᵢ deren Radarsignatur RS_{FROi} und deren Position P_{FROi} angeben, mit i = 1, 2,..., n, und ein Radarsystem mit einem am Fahrzeug angeordneten Radarsensor zur Abtastung einer aktuellen Umgebung des Fahrzeugs mittels Radarstrahlung und zur kontinuierlichen Erfassung dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelbar sind, mit k = 0, 1, 2, ..., m. Das Radarsystem ist dabei derart ausgeführt und eingerichtet, dass in den Fixpunktdaten abhängig von der ersten Position P1(t) aus den Radarobjekten FROᵢ diejenigen Radarobjekte FROᵢ* mit den zugehörigen Radarsignaturen RS_{FROi*} und Positionen P_{FROi*} ermittelbar sind, deren Positionen P_{FROi}* in einem vorgebbaren von der Bewegungsrichtung BR(t) abhängigen Bereich um die aktuelle erste Position P1(t) des Fahrzeugs liegenden, , wobei die Fixpunktdaten auf Basis von Radardaten erzeugt sind, in denen die Erdoberfläche und die darauf angeordneten Radarobjekte FROᵢ in Aufsicht abgebildet sind und anschließend die in den Radardaten in Aufsicht erfassten Radarsignaturen der Radarobjekte FROᵢ in Radarsignaturen RS_{FROi} umgewandelt sind, die die Radarobjekte ROₖ(t) in Seitenansicht aufweisen.

Das Radarsystem ist weiterhin derart ausgeführt und eingerichtet, dass die Radarsignaturen RS_{FROi*} der Radarobjekte FRO_{i*} mit den Radarsignaturen RSₖ(t) der Radarobjekte ROₖ(t) verglichen werden, und dabei diejenigen Radarobjekte ROₖ(t)* ermittelbar sind, für die gilt: RSₖ(t) = RS_{FROi*}, wobei bei Vorliegen dieser Bedingung unterstellt wird, dass für die Radarobjekte gilt: ROₖ(t)* = FROᵢ* und für Positionen P_{Rok(t)*} der Radarobjekte ROₖ(t)* gilt: P_{ROk(t)*} = P_{FROi*}, weiterhin dass auf Basis der Radardaten die relativen Positionen ΔP_{Ok(t)*} der jeweiligen Radarobjekte ROₖ(t)* zu dem Fahrzeug ermittelt werden, und dass auf Basis jeweils der Positionen P_{ROk(t)*} = P_{FROi*} und der relativen Positionen ΔP_{Ok(t)*} eine zweite Position P2(t) des Fahrzeugs ermittelt wird. Schließlich ist das erste Mittel derart ausgeführt und eingerichtet, dass die erste Position P1(t) des Fahrzeugs auf Basis der ermittelten zweiten Position P2(t) korrigiert und/oder eine Positionswarnung ausgegeben wird, wenn die erste Position P1(t) und die zweite Position P2(t) um mehr als ein vorgegebener Grenzwert voneinander abweichen.

Das erste Mittel ist bevorzugt ein satellitenbasiertes und/oder trägheitsbasiertes Positionsermittlungssystem. Das erste Mittel ermöglicht mithin eine Bestimmung der ersten Position P1(t) mit einer gegebenen Positionsungenauigkeit von ΔP1(t). Diese liegt, wie in der Einleitung ausgeführt, typischer Weise im Bereich von ± 5 bis ± 100 m.

Das zweite Mittel umfasst vorteilhaft einen Magnetfeldsensor und/oder ein Trägheitssystem und/oder ein GNSS System. Die Bewegungsrichtung bzw. die Fahrtrichtung wird in heutigen Fahrzeugen typischerweise ohnehin ermittelt und wird in einer vorteilhaften Weiterbildung von dem entsprechenden Fahrzeugsystem bereitgestellt.

Das dritte Mittel stellt die Fixpunktdaten bereit. Diese Fixpunktdaten geben auf der Planetenoberfläche ortsfest angeordnete signifikante Radarobjekte FROᵢ, deren Radarsignatur RS_{FROi} und deren Positionen P_{FROi} an. Die Positionen P_{FROi} sind dabei vorteilhaft mit einer Positionsgenauigkeit im Bereich von < 50 cm, < 30 cm, < 25 cm, < 10 cm, oder < 5 cm angegeben. Die Radarsignatur RS_{FROi} hängt insbesondere von der Größe, der Formgebung und den Materialien ab, aus denen das Radarobjekte FROᵢ besteht, und ermöglicht insbesondere eine Identifizierung und Unterscheidung einzelner Radarobjekte FROᵢ.

Die Radarobjekte FROᵢ sind vorliegend vorteilhaft Gegenstände, die auftreffende RadarStrahlung (Mikrowellen) reflektieren. Der Haupt-Abstrahl-Winkel der rückgestreuten Radarenergie hängt dabei von den dielektrischen Eigenschaften und mechanischen Eigenschaften des jeweiligen Radarobjektes FROᵢ ab. Mit einem Radarsensor erkennt man am besten Metallflächen, die so ausgerichtet sind, dass sie die vom Radar einfallenden Mikrowellen direkt reflektieren. Für die vorliegende Anwendung werden vorteilhaft nur Radarobjekte FROᵢ verwendet, die von dem Fahrzeug aus vom Radarsystem erfasst bzw. gesehen werden können, weil sie eine Amplitude deutlich über dem Rausch-Niveau bzw. der Rückstreuung des Hintergrunds aufweisen. Vorliegend werden sie deshalb als "signifikante" Radarobjekte bezeichnet. Vorteilhaft werden an der Planetenoberfläche benachbart angeordnete Radarobjekte derart ausgewählt (und damit zu Radarobjekten FROᵢ der Fixpunktdaten), dass sie unterschiedliche und somit leicht und eindeutig identifizierbare Radarsignaturen RS_{FROi} aufweisen. Dies vereinfacht eine eindeutige Identifikation der Radarobjekte FROᵢ.

Erfindungsgemäß sind die Fixpunktdaten auf Basis von Radardaten erzeugt, in denen das Verkehrswegenetz und die darin angeordneten Radarobjekte FROᵢ in Aufsicht abgebildet sind. Vorteilhaft werden die Radardaten hierbei mittels flugzeuggetragener oder satellitengetragener Radarsensoren erfasst. Hierzu sind Verfahren bekannt, mit denen Radarobjekte FROᵢ mittels Radarsatelliten oder luftfahrzeuggetragener Radarsensoren mit einer Positionsgenauigkeit von wenigen Zentimetern insbesondere bis zu 2 - 10 cm erfasst werden können. Eine flächendeckende Ermittlung von Radarobjekten FROᵢ ist somit in relativ kurzer Zeit (wenige Wochen) für ganze Länder oder Kontinente möglich, so dass eine hinreichende Aktualität der Fixpunktdaten gewährleistet werden kann.

Hochgenaue absolute Koordinaten der Radarobjekte FROᵢ aus Satelliten-Daten können somit sehr kosteneffektiv weltweit bestimmt werden. Während optische Bilder eine relativ gleichmäßige Helligkeit aufweisen, treten bei Radar-Bildern Gegenstände aus Metall (Leitplanken, Masten, Laternen, Schilderbrücken, Brückengeländer) sehr viel stärker hervor, als der das Hintergrundbild mit dem Straßenbelag und der Vegetation. Sie sind daher wesentlich besser identifizierbar. Weiterhin streuen Gebäudekanten und -Ecken sehr gut. Oft ergeben sich sog. "Radar-Punktziele", die wesentlich kleiner als eine Auflösungszelle (1m x 1m im TerraSAR-X Spotlight Mode Bild) sind. Die Arbeiten von Balss, et al. (DLR MF-SAR) haben gezeigt, dass derartige "Punktziele" in TerraSAR-X und TanDEM-X Radar-Bildern mit einer Genauigkeit von wenigen Zentimetern bestimmt werden können (vgl. hierzu http://elib.dlr.de/82537/).

Erfindungsgemäß liegen die zunächst in Aufsicht erfassten Radarsignaturen der Radarobjekte FROᵢ als Radarsignaturen RS_{FROi} vor, die von dem Fahrzeug erfassbar sind. Bei der erfindungsgemäßen Anwendung für den Kraftfahrzeugverkehr, erfasst der Radarsensor des Kraftfahrzeugs die Radarobjekte FROᵢ typischerweise in einer Seitenansicht, so dass die in Aufsicht erfassten Radarsignaturen in Radarsignaturen RS_{FROi} umgewandelt sind, die die Radarobjekte FROᵢ in Seitenansicht aufweisen. Natürlich bezieht sich die vorstehend genannte leichte Identifizierbarkeit der Radarobjekte FROᵢ durch entsprechende Radarsignaturen RS_{FROi} und die Forderung, dass die vom Radarsensor erfasste Radar-Amplitude deutlich über dem Rausch-Niveau bzw. der Rückstreuung des Hintergrunds liegt, in diesem Fall auf Seitenansichten der Radarobjekte FROᵢ bzw. auf diejenigen Ansichten der Radarobjekte FROᵢ die von dem am Fahrzeug angeordneten Radarsensor erfasst werden.

Vorteilhaft werden spezielle Radarreflektoren als Radarobjekte FROᵢ an geeigneten Positionen und in geeigneten Abständen auf der Planetenoberfläche angebracht, bspw. entlang von Straßen eines Verkehrsstraßennetzes. So kann gewährleistet werden, dass entlang bestimmter Routen des Verkehrsstraßennetzes eine kontinuierliche Ermittlung der zweiten Position P2(t) mit einer entsprechend hohen Positionsauflösung möglich ist. Das ist insbesondere für Fahrerassistenzsysteme von Kraftfahrzeugen von Vorteil, die eine hochgenaue Positionsbestimmung des Fahrzeugs erfordern (bspw. autonomes Fahren).

Das Radarsystem umfasst vorteilhaft einen Auswerterechner, mit dem zunächst auf Basis der aktuellen, vom ersten Mittel ermittelten ersten Position P1(t) in den Fixpunktdaten P1(t) aus den dort hinterlegten Radarobjekten FROᵢ diejenigen Radarobjekte FROᵢ* mit den zugehörigen Radarsignaturen RS_{FROi*} und Positionen P_{FROi*} ermittelt werden, deren Positionen P_{FROi}* in einem vorgebbaren von der Bewegungsrichtung BR(t) abhängigen Bereich um die aktuelle erste Position P1(t) des Fahrzeugs liegenden. Mit der "fehlerbehafteten" ersten Position P1(t) steht eine ungefähre Position des Fahrzeugs zur 'Verfügung. Diese "ungefähre" erste Position P1(t) dient nun dazu aus den Fixpunktdaten diejenigen Radarobjekte FROᵢ* mit den zugehörigen Radarsignaturen RS_{FRoi*} und exakten Positionen P_{FROi*} auszuwählen, die vom Fahrzeug aus abhängig von der aktuellen Bewegungsrichtung (Fahrtrichtung bei Kraftfahrzeugen) von der ersten Position P1(t) erkennbar sein sollten. Diese ausgewählten Radarobjekte FROᵢ* sind vorliegend mit einem Stern gekennzeichnet.

Diese ausgewählten Radarobjekte FROᵢ* und deren Radarsignaturen RS_{FROi*} werden weiterhin vom Radarsystem /Auswerterechner mit den Radarsignaturen RSₖ(t) der Radarobjekte ROₖ(t) verglichen, die vom Radarsensor aktuell erfasst wurden. Dabei werden diejenigen Radarobjekte ROₖ(t)* ermittelt, deren Radarsignatur RSₖ(t) einer Radarsignatur RS_{FROi*} entspricht, d.h. für die gilt: RSₖ(t) = RS_{FROi*} Bei bei Vorliegen dieser Bedingung wird weiterhin unterstellt, dass für die Radarobjekte gilt: ROₖ(t)* = FROᵢ* und für Positionen P_{ROk(t)*} der Radarobjekte ROₖ(t)* gilt: P_{ROk(t)*} = P_{FROi*}. Mit anderen Worten wird, sofern der Vergleich einer vom Radarsensor erfassten Radarsignatur RSₖ(t) mit einer ausgewählten Radarsignaturen RS_{FROi*} eine eindeutige Übereinstimmung ergibt, eine Identifikation des zugeordneten Radarobjekte FROᵢ* in den vom Radarsensor erfassten Radardaten unterstellt.

Kommt es bei dem Vergleich zu keiner eindeutigen Identifikation einer Radarsignatur RS_{FROi*} wird das Erfassen aktueller Radardaten mittels des Radarsensors und die anschließende vorstehend beschriebene Auswertung kontinuierlich fortgesetzt, bis zumindest ein Radarobjekt FROᵢ* = ROₖ(t) eindeutig identifiziert ist.

Eine vorteilhafte Weiterbildung der Vorrichtung zeichnet sich dadurch aus, dass die Fixpunktdaten für zumindest einige signifikante Radarobjekte FROᵢ optische Daten ODᵢ umfassen, die die entsprechenden Radarobjekte FROᵢ optisch kennzeichnen, dass das Radarsystem einen optischen Sensor zur kontinuierlichen Erfassung von Bilddaten BD(t) der aktuellen Umgebung des Fahrzeugs aufweist, und dass das Radarsystem derart ausgeführt und eingerichtet ist, dass die Bilddaten BD(t) zur Verifikation von in der aktuellen Umgebung des Fahrzeugs erkannten Radarobjekte ROₖ(t) bzw. FROᵢ* verwendet werden. In dieser Weiterbildung erfolgt mithin eine zusätzliche optische Verifikation eines Radarobjekts FROᵢ* = ROₖ(t). Dadurch wird die Robustheit und Zuverlässigkeit der Ermittlung der zweiten Position P2(t) erhöht. Vorteilhaft umfassen die vom optischen Sensor erfassten Bilddaten BD(t) auch einen infraroten Lichtanteil. Mit der Identifikation zumindest eines Radarobjekts FROᵢ* = ROₖ(t)* ist die diesem Radarobjekt zugeordnete Position P_{ROk(t)*} = P_{FROi*} aus den Fixpunktdaten mit hoher Positionsgenauigkeit bekannt.

Das Radarsystem ist weiterhin erfindungsgemäß derart ausgeführt und eingerichtet, dass auf Basis der vom Radarsensor erfassten Radardaten die relativen Positionen ΔP_{Ok(t)*} der jeweiligen Radarobjekte ROₖ(t)* = FROᵢ* zu dem Fahrzeug ermittelt werden. Hierzu erlauben heutige Radarsensoren eine Distanzermittlung mit einer Genauigkeit von wenigen Zentimetern und einer Winkelauflösung von 1° und darunter. Somit kann mittels Triangulation (Position, Distanz, Winkel) auf Basis jeweils der Positionen P_{ROk(t)*} = P_{FROi*} und der zugehörigen relativen Positionen ΔP_{Ok(t)*} eine zweite Position P2(t) des Fahrzeugs ermittelt werden. Wird nur ein Radarobjekt ROₖ(t)* = FROᵢ* identifiziert, dann ergibt sich aus der Position P_{ROk(t)*} = P_{FROi*}, der aus den Radardaten ermittelten Distanz und dem Winkel zu dem einen Radarobjekt ROₖ(t)* = FROᵢ* die Position P2(t) mit einer Positionsgenauigkeit im Bereich bspw. von 2 bis 50 cm. Werden mehrere Radarobjekte ROₖ(t)* = FROᵢ* identifiziert, dann ergeben sich aus den entsprechenden Positionen P_{ROk(t)*} = P_{FROi*}, den aus den Radardaten ermittelten Distanzen und Winkeln (Horizontalwinkeln/ Azimutwinkeln) zunächst mehrere zweite Positionen P2ₖ(t), aus denen bspw. durch Mittelung oder andere Algorithmen die zweite Position P2(t) ermittelt wird.

Das erste Mittel ist erfindungsgemäß derart ausgeführt und eingerichtet, dass die erste Position P1(t) des Fahrzeugs auf Basis der ermittelten zweiten Position P2(t) korrigiert und/oder eine Positionswarnung ausgegeben wird, wenn die erste Position P1(t) und die zweite Position P2(t) um mehr als ein vorgegebener Grenzwert voneinander abweichen.

Vorteilhaft erfolgt eine Korrektur der ersten Position P1(t) des Fahrzeugs auf Basis der ermittelten zweiten Position P2(t) nur dann, wenn eine Betragsdifferenz |P1(t) - P2(t)| einen vorgegebenen ersten Grenzwert übersteigt. Dieser erste Grenzwert ist vorteilhaft durch die Positionsungenauigkeit der zweiten Position P2(t) bestimmt. Vorteilhaft wird zusätzlich eine Positionswarnung ausgegeben, wenn die Betragsdifferenz |P1(t) — P2(t)| einen zweiten Grenzwert übersteigt. Damit wird der Führer des Fahrzeugs zumindest darauf aufmerksam gemacht, dass die Vorrichtung eine über den zweiten Grenzwert hinaus gehende Differenz zwischen der ersten Position P1(t) und der zweiten Position P2(t) festgestellt hat.

Die vorgeschlagene Vorrichtung dient damit insbesondere zu einem Positions-Up-date des ersten Mittels, d.h. der von dem ersten Mittel ermittelten ersten Position P1(t), durch eine zweite Position P2(t), die auf Basis von Fixpunktdaten, d.h. hochgenauen Radar-Passpunkten (Radarobjekte FROi), und vom Radarsensor ermittelten Laufzeit-, Winkelmessungen, bzw. erfassten Radarsignaturen durch Triangulation ermittelt wird. Zur Erkennung und richtigen Zuordnung der Radarobjekte FROᵢ zu den mit dem Radarsensor erkannten Radarobjekten ROₖ(t) ist es notwendig, dass die Vorrichtung die ungefähre Position (erste Position P1(t)) kennt.

Mit der vorgeschlagenen Vorrichtung lässt sich aus bereits vorhandenen und archivierten Radarbildern ein weltweites Passpunktnetz von Radarobjekten _{FROi} entlang bspw. der wichtigsten Straßen aufbauen. Diese Methode ist besonders kostengünstig, da keine insitu Messungen oder aufwändigen Befliegungen notwendig sind. Auch von entlegenen oder nicht ohne weiteres erreichbaren Weltregionen kann damit die Möglichkeit der hochgenauen, von GNSS unabhängigen Navigation geschaffen werden.

Die benötigten Radarsensoren am Fahrzeug (Nahbereichs-Radar, Long-Range Radar LLR, Multi-Mode-Radar) sind in modernen Straßen-Fahrzeugen zwecks Kollisionswarnung ohnehin oft vorhanden. Für den Betrieb bei Tageslicht können auch Kameras zur Aufnahme und Vermessung der Passpunkte verwendet werden.

Die Vorteile der vorgeschlagenen Vorrichtung sind, dass diese vom Wetter und von der Beleuchtung unabhängig arbeitet, die Verteilung und Dichte von Radarobjekten FROᵢ auf der Planetenoberfläche viel übersichtlicher (selektiver und markanter) als bei optischen Methoden ist.

Die Erfindung betrifft weiterhin ein Fahrzeug, insbesondere ein Kraftfahrzeug, mit einer Vorrichtung wie sie vorstehend beschrieben wurde.

Ein verfahrensgemäßer Aspekt der Aufgabe wird mit einem Verfahren zur Positionsbestimmung eines Fahrzeugs, das sich auf der Erdoberfläche in einem Verkehrswegenetz bewegt, gelöst.

Das vorgeschlagene Verfahren umfasst folgenden Schritte: Bestimmen einer ersten Position P1(t) des Fahrzeugs, Bestimmen einer Bewegungsrichtung BR(t) des Fahrzeugs, Bereitstellen einer Anzahl n von Fixpunktdaten, wobei die Fixpunktdaten zumindest für auf der Planetenoberfläche ortsfest angeordnete signifikante Radarobjekte FROᵢ, deren Radarsignatur RS_{FROi} und deren Position P_{FROi} angeben, mit i = 1, 2,..., n, durch ein am Fahrzeug angeordnetes Radarsystem Abtasten einer aktuellen Umgebung des Fahrzeugs mittels Radarstrahlung und kontinuierliches Erfassen dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelt werden, mit k = 0, 1, 2, ..., m, in den Fixpunktdaten abhängig von der ersten Position P1(t) aus den Radarobjekten FROᵢ Ermitteln derjenigen Radarobjekte FROᵢ* mit den zugehörigen Radarsignaturen RS_{FROi*} und Positionen P_{FROi*}, deren Positionen P_{FROi}* in einem vorgebbaren von der Bewegungsrichtung BR(t) abhängigen Bereich um die aktuelle erste Position P1(t) des Fahrzeugs liegenden, wobei die Fixpunktdaten auf Basis von Radardaten erzeugt sind, in denen die Erdoberfläche und die darauf angeordneten Radarobjekte FROᵢ in Aufsicht abgebildet sind und anschließend die in den Radardaten in Aufsicht erfassten Radarsignaturen der Radarobjekte FROᵢ in Radarsignaturen RS_{FROi} umgewandelt sind, die die Radarobjekte ROₖ(t) in Seitenansicht aufweisen, Vergleichen der Radarsignaturen RS_{FROi*} der Radarobjekte FROᵢ* mit den Radarsignaturen RSₖ(t) der Radarobjekte ROₖ(t), und dabei Ermitteln derjenigen Radarobjekte ROₖ(t)*, für die gilt: RSₖ(t) = RS_{FROi*}, wobei bei Vorliegen dieser Bedingung unterstellt wird, dass für die Radarobjekte gilt: ROₖ(t)* = FROᵢ* und für Positionen P_{ROk(t)*} der Radarobjekte ROₖ(t)* gilt: P_{ROk(t)*} = P_{FROi*}, auf Basis der Radardaten Ermitteln der relativen Positionen ΔP_{Ok(t)*} der jeweiligen Radarobjekte ROₖ(t)* zu dem Fahrzeug, und auf Basis jeweils der Positionen P_{ROk(t)*} und der relativen Positionen ΔP_{Ok(t)*} Ermitteln einer zweiten Position P2(t) des Fahrzeugs, wobei die erste Position P1(t) des Fahrzeugs auf Basis der ermittelten zweiten Position P2(t) korrigiert wird und/oder eine Positionswarnung ausgegeben wird, wenn die erste Position P1(t) und die zweite Position P2(t) um mehr als ein vorgegebener Grenzwert voneinander abweichen.

Eine Weiterbildung des vorgeschlagenen Verfahrens zeichnet sich dadurch aus, dass die Fernerkundungs-Radardaten durch einen flugzeuggetragenen oder einen satellitengetragenen Radarsensor erfasst werden.

Eine Weiterbildung des vorgeschlagenen Verfahrens zeichnet sich dadurch aus, dass die bereitgestellten Fixpunktdaten für zumindest einige signifikante Radarobjekte FROᵢ optische Daten ODᵢ umfassen, die die entsprechenden Radarobjekte FROᵢ optisch kennzeichnen, mit einem optischen Sensor kontinuierlich Bilddaten BD(t) der aktuellen Umgebung des Fahrzeugs erfasst werden, und die Bilddaten BD(t) zur Verifikation von in der aktuellen Umgebung des Fahrzeugs erkannten Radarobjekten ROₖ(t) verwendet werden.

Zusätzliche vorteilhafte Weiterbildungen und Vorteile ergeben sich durch eine analoge und sinngemäße Übertragung der in Zusammenhang mit der vorgeschlagenen Vorrichtung gemachten vorstehenden Ausführungen.

Mit der vorliegenden Erfindung wird insbesondere eine zusätzliche, die etablierten Verfahren wie GNSS ergänzende Methode, beschrieben, die hochgenaue Koordinaten sowie Lagedaten zur Ausrichtung des Fahrzeugs liefert. Dadurch wird die Positionsbestimmung sicherer, verlässlicher, robuster und genauer. Dies ist insbesondere zur Anwendung bei einem autonomen Betrieb von Fahrzeugen (Straßen-, Schienen) erforderlich.

Die Aufgabe der Erfindung ist weiterhin gelöst durch ein Computersystem, mit einer Datenverarbeitungsvorrichtung, wobei die Datenverarbeitungsvorrichtung derart ausgestaltet ist, dass ein vorstehend beschriebenes Verfahren auf einer Datenverarbeitungsvorrichtung ausgeführt wird.

Zudem wird die Aufgabe der Erfindung gelöst durch ein digitales Speichermedium mit elektronisch aus lesbaren Steuersignalen, wobei die Steuersignale so mit einem programmierbaren Computersystem zusammenwirken können, dass ein vorstehend beschriebenes Verfahren ausgeführt wird.

Ferner wird die Aufgabe der Erfindung gelöst durch ein Computer-Programm-Produkt mit auf einem maschinenlesbaren Träger gespeicherten Programmcode zur Durchführung eines vorstehend beschriebenen Verfahrens, wenn der Programmcode auf einer Datenverarbeitungsvorrichtung ausgeführt wird.

Schließlich betrifft die Erfindung ein Computer-Programm mit Programmcodes zur Durchführung eines vorstehend beschriebenen Verfahrens, wenn das Programm auf einer Datenverarbeitunqsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine schematisierte Darstellung einer vorgeschlagenen Vorrichtung,
- Fig. 2: eine schematisierte Darstellung eines Ablaufplans eines vorgeschlagenen Verfahrens.

Als ein Ausführungsbeispiels sei zunächst ein zusätzliches und unabhängig arbeitendes Navigationssystem für Fahrzeuge angegeben, das Allwetter- und Nachtfähig ist, und die bereits im Fahrzeug vorhandene Positionsdaten ständig überprüft und ggfs. verbessert, sowie eine Warnung ausgibt, wenn es zu gravierenden Abweichungen in den ermittelten Positionsdaten kommt. Die Anwendungen dieses Ausführungsbeispiels liegen bei der Navigation von Fahrzeugen jeder Art (PKW, LKW, insbesondere autonome Fahrzeuge, Schiffe, Flugzeuge, Drohnen, ect.), d.h. dort wo es auf hohe Störsicherheit ankommt und mehrere möglichst unabhängig voneinander arbeitende Systeme ihre Positionsergebnisse ständig mit einander vergleichen. Eine wichtige Anwendung sind sogenannte "FahrerAssistenzsysteme", die ein völlig autonomes Navigieren und Fahrenden eines Autos ermöglichen.

Um eine Allwetter und Nacht-Fähigkeit zu erreichen wird ein KFZ-Radar eingesetzt, wie es ähnlich schon für sog. Spurwechsel-Assistenten und zur Kollisions-Vermeidung in Fahrzeugen verwendet wird. Das KFZ-Radar wird dazu verwendet, um die Entfernung (Range) und den horizontalen Sichtwinkel (Azimut) zu einem markanten Radarobjekt und dessen Radarsignatur im Sichtbereich der Straße zu messen. Es werden für die Auswertung Radarobjekte ausgewählt, die mit dem Radarsensor gut sichtbar sind. Der Radarsensor erfasst in der Regel metallische Objekte wie Verkehrsschilder, Schilderbrücken, Lichtmasten, Leitplanken, Lärmschutzwände sowie allgemein Gebäudekanten.

Die Koordinaten der Radarobjekte/Passpunkte beziehen sich bevorzugt auf Punktquellen an metallischen solchen Objekten, die der vorgeschlagenen Vorrichtung genau bekannt sind, sodass mit den Radar-Messung (Entfernung und Winkel zum Radarobjekt) die Fahrzeugposition bestimmt werden kann. Sind gleichzeitig mehrere Radarobjekte/ Passpunkte vom Radarsensor sichtbar, kann durch Triangulation die eigene Position noch genauer ermittelt werden und der Messwert erhält mehr Gewicht beim Abgleich mit den anderen Navigationssystemen.

In einem vorbereitenden Schritt wird eine Passpunkt-Datenbank (Fixpunktdaten) für Radarobjekte (bzw. optische Sensoren) aufgebaut. Sie enthält die genauen Koordinaten der markanten Punkte (sog. Radarreflektoren), die in der Regel von der Straße aus sichtbar sind. Die vorgeschlagene Vorrichtung im Fahrzeug nutzt die (von anderen Systemen) gelieferten und zu überprüfenden (und eventuell nur grob bekannten) aktuellen Positionsdaten des Fahrzeugs (erste Position P1(t)) und extrahiert aus der Passpunkt-Datenbank die vom Fahrzeug aus vermeintlich gut sichtbaren Passpunkte/Fixpunktdaten und deren Koordinaten.

Das KFZ-Radar erfasst die Radarobjekte in der Umgebung und bestimmt mit den entsprechenden Koordinaten aus den Fixpunktdaten grob ihre Positionen und vergleicht diese mit den aus der Datenbank extrahierten Passpunkt-Informationen. Wenn die Differenz ein vorgebbares Fehlermaß nicht überschreitet, wird davon ausgegangen, dass eine Untermenge der in der Datenbank hinterlegten Radarobjekte erkannt wurde. Sogenannter "Radar Clutter", also Rückstreuung von anderen Objekten oder auch Störungen müssen bei diesem Prozess eliminiert werden, bzw. dürfen nicht verwendet werden. Das vorgeschlagene Radar-Verfahren hat Vorteilet, da hier die Passpunkte/Radaorobjekte besser erkennbar sind, als in einem optischen Bild.

Ist sichergestellt, dass das KFZ-Radar die richtigen Passpunkte/Radarobjekte im Visier hat, wird der Positionsbestimmungsprozess umgedreht und die hochgenauen Positionen der Passpunkte/Radarobjekte verwendet, um die Fahrzeug-Position zu bestimmen.

Der Aufbau der Passpunkt-Datenbank mit den Fixpunktdaten kann mittels Mess-Fahrzeugen erfolgen. Ein mit hochgenauen Lage und Positions-Sensoren ausgestattetes Mess-Fahrzeug fährt alle relevanten Straßen ab und erfasst mit einem hochgenauen KFZ-Radar alle markanten/signifikaten Radarobjekte in der Umgebung der Straße. Das Mess-Fahrzeug kann die Koordinaten der Radarobjekte genau bestimmen. Die Fahrzeuge, die später die vorgeschlagene Vorrichtung, benötigen nur noch eine vergleichsweise preiswerte Lage- und Positions-Sensorik. Es wird also in aufwendige, aber einmalige "Lern- bzw. Kalibrier Fahrten" investiert, um bei den Massenprodukten Aufwand zu sparen.

Wenn man den Aufwand scheut, alle Straßen abzufahren, könnte bspw. auf "Google Street View" Bilddaten zurückgegriffen werden. Mit Hilfe von Objekt-Erkennungssoftware werden die Passpunkte/Radarobjekte identifiziert und mit Hilfe der zur Verfügung stehenden Informationen (Koordinaten des Aufnahme-Standorts) auch die Koordinaten der Passpunkte/Radarobjekte bestimmt. Mit Hilfe eines Simulators kann abgeschätzt werden, wie später das KFZ-Radar die Passpunkte "sieht". Man identifiziert auf diese Weise Objekte, die aus den optischen Bildmessungen bekannt sind und macht sie für Nacht-Fahrten mit dem KFZ-Radar nutzbar. Da keine neuen Daten erhoben werden müssen, ist dies vermutlich das kostengünstigste Verfahren, um die Passpunkt-Datenbank/Fixpunktdaten aufzubauen.

Wenn eine Vermessung der Passpunkte/Radarobjekt vor Ort nicht möglich ist und keine Street View Daten zur Verfügung stehen, wie z. B. aus rechtlichen Gründen in einigen Ländern wie China oder es sich um ein militärisches Einsatzgebiet ("off-road") handelt, können Bilddaten von SAR Radar Satelliten, wie z. B. dem deutschen TerraSAR-X Satelliten verwendet werden, um hochgenaue Koordinaten der Passpunkte/Radarobjekte FROᵢ zu bestimmen. Durch Fortschritte der Technik ist es möglich geworden, die Koordinaten der Bildpixel mit nur wenigen Zentimetern Fehler anzugeben. Das Problem ist aber, dass die Radarobjekte nicht gleichmäßig in alle Richtungen streuen und sie deshalb aus verschiedenen Richtungen (von der Straße und von oben) gesehen, ganz unterschiedlich hell sein können. Um die Satellitendaten trotzdem verwenden zu können, bestehen folgende drei Möglichkeiten, die auch kombiniert werden können.
a) Eine Verschneidung mit Daten der Radar-Mess-Fahrten. Man könnte die mittels der Radar Mess-Fahrzeuge gefundenen Radarobjekte mit denen aus der Satelliten-Messung zur Deckung bringen, d.h. matchen, und würde dann die genaueren Koordinaten der Satellitenmessung verwenden. Das Matching wird auch als "Sensor Fusion" bezeichnet.
b) Eine Verschneidung mit Daten der Kamera-Mess-Fahrten (Google Street View). Man verwendet die in den optischen Daten aufgefundenen Radarobjekte, die als "solide" Radar-Streuer/Reflektoren bekannt sind (z. B. Schilderbrücken) und matched diese mit den Satelliten-Daten. Durch Verwendung von Modellen über das Radar-Rückstreuverhalten dieser Objekte kann simuliert werden, wie voraussichtlich das KFZ-Radar die Objekte "sieht". Diese Option wird favorisiert.
c) Eine Verschneidung mit optischen Satelliten Daten. Ist das Gebiet nicht zugänglich, müssen die Passpunkte/Radarobjekte sowohl in Satelliten-Bildern von Radar-Satelliten als auch optischen Satelliten identifiziert werden und durch Simulation die voraussichtliche Radar-Signatur für die Sicht von Straße bestimmt werden. Dies ist nicht zu aufwändig, da man sich auf gut bekannte Objekte beschränkt, die immer in der Nähe einer Straße vorkommen (Schilder, Brücken, Leitplanken, Strom- und Lichtmasten).

Eine operationelle Pflege der Passpunkt-Datenbank mit den Fixpunktdaten ist mittels dem sogenannten "Crowd Sourcing" möglich. Um die Fixpunktdaten immer auf einem aktuellen Stand zu halten, werden von der vorgeschlagenen Vorrichtung im Fahrzeug Auffälligkeiten in einem "Fehler-Speicher" registriert und von Zeit zu Zeit (z. B. bei einem Datenbank-Update) an einen Provider gemeldet. Dabei werden verschiedene Fälle unterschieden:
a) von vielen Fahrzeugen aus nicht sichtbare Radarobjekte
b) Radarobjekte die offenbar gar nicht mehr vorhanden sind
c) Radarobjekte die von vielen Fahrzeugen als markant eingestuft werden, die aber nicht in der Datenbank eingetragen sind.

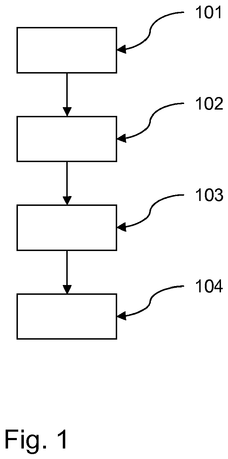

**Fig. 1** zeigt eine schematisierte Darstellung einer vorgeschlagenen Vorrichtung zur Positionsbestimmung eines Fahrzeugs auf oder über einer Planetenoberfläche, insbesondere in einem Verkehrswegenetz auf der Planetenoberfläche, umfassend: ein erstes Mittel **101** zur Bestimmung einer ersten Position P1(t) des Fahrzeugs; ein zweites Mittel **102** zur Bestimmung einer Bewegungsrichtung BR(t) des Fahrzeugs; ein drittes Mittel **103** zur Bereitstellung einer Anzahl n von Fixpunktdaten, wobei die Fixpunktdaten zumindest für auf der Planetenoberfläche ortsfest angeordnete signifikante Radarobjekte FROᵢ deren Radarsignatur RS_{FROi} und deren Position P_{FROi} angeben, mit i = 1, 2,..., n; ein Radarsystem **104** mit einem am Fahrzeug angeordneten Radarsensor zur Abtastung einer aktuellen Umgebung des Fahrzeugs mittels Radarstrahlung und zur kontinuierlichen Erfassung dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelbar sind, mit k = 0, 1, 2, ..., m, und wobei das Radarsystem **104** derart ausgeführt und eingerichtet ist, dass in den Fixpunktdaten abhängig von der ersten Position P1(t) aus den Radarobjekten FROᵢ diejenigen Radarobjekte FROᵢ* mit den zugehörigen Radarsignaturen RS_{FRoi*} und Positionen P_{FROi*} ermittelbar sind, deren Positionen P_{FROi}* in einem vorgebbaren von der Bewegungsrichtung BR(t) abhängigen Bereich um die aktuelle erste Position P1(t) des Fahrzeugs liegenden, die Radarsignaturen RS_{FROi*} der Radarobjekte FROᵢ* mit den Radarsignaturen RSₖ(t) der Radarobjekte ROₖ(t) verglichen werden, und dabei diejenigen Radarobjekte ROₖ(t)* ermittelbar sind, für die gilt: RSₖ(t) = RS_{FROi*}, wobei bei Vorliegen dieser Bedingung unterstellt wird, dass für die Radarobjekte gilt: ROₖ(t)* = FROᵢ* und für Positionen P_{ROk(t)*} der Radarobjekte ROₖ(t)* gilt: P_{ROk(t)*} = P_{FROi*}, auf Basis der Radardaten die relativen Positionen ΔP_{Ok(t)*} der jeweiligen Radarobjekte ROₖ(t)* zu dem Fahrzeug ermittelt werden, und auf Basis jeweils der Positionen P_{ROk(t)*} = P_{FROi*} und der relativen Positionen ΔP_{Ok(t)*} eine zweite Position P2(t) des Fahrzeugs ermittelt wird; wobei das erste Mittel **101** derart ausgeführt und eingerichtet ist, dass die erste Position P1(t) des Fahrzeugs auf Basis der ermittelten zweiten Position P2(t) korrigierbar ist und/oder eine Positionswarnung ausgebbar ist, wenn die erste Position P1(t) und die zweite Position P2(t) um mehr als ein vorgegebener Grenzwert voneinander abweichen.

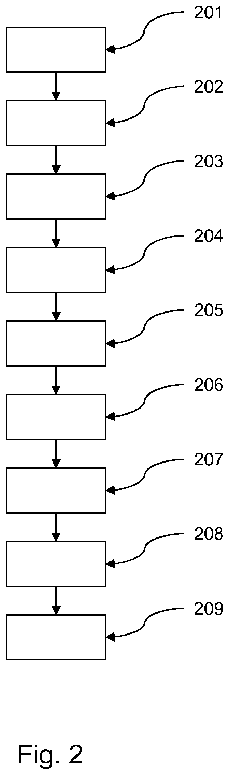

**Fig. 2** zeigt eine schematisierte Darstellung eines Ablaufplans eines vorgeschlagenen Verfahrens zur Positionsbestimmung eines Fahrzeugs auf oder über einer Planetenoberfläche, insbesondere in einem Verkehrswegenetz auf der Planetenoberfläche, mit folgenden Schritten. In einem ersten Schritt **201** erfolgt ein Bestimmen einer ersten Position P1(t) des Fahrzeugs. In einem zweiten Schritt **202** erfolgt ein Bestimmen einer Bewegungsrichtung BR(t) des Fahrzeugs. In einem dritten Schritt **203** erfolgt ein Bereitstellen einer Anzahl n von Fixpunktdaten, wobei die Fixpunktdaten zumindest für auf der Planetenoberfläche ortsfest angeordnete signifikante Radarobjekte FROᵢ deren Radarsignatur RS_{FROi} und deren Position P_{FROi} angeben, mit i = 1, 2,..., n. In einem vierten Schritt **204** erfolgt ein Abtasten einer aktuellen Umgebung des Fahrzeugs mittels Radarstrahlung und kontinuierliches Erfassen dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelt werden, mit k = 0, 1, 2, ..., m. In einem fünften Schritt **205** erfolgt in den Fixpunktdaten abhängig von der ersten Position P1(t) aus den Radarobjekten FROᵢ ein Ermitteln derjenigen Radarobjekte FROᵢ* mit den zugehörigen Radarsignaturen RS_{FROi*} und Positionen P_{FROi*}, deren Positionen P_{FROi}* in einem vorgebbaren von der Bewegungsrichtung BR(t) abhängigen Bereich um die aktuelle erste Position P1(t) des Fahrzeugs liegenden. In einem sechsten Schritt **206** erfolgt ein Vergleichen der Radarsignaturen RS_{FROi*} der Radarobjekte FROᵢ* mit den Radarsignaturen RSₖ(t) der Radarobjekte ROₖ₍ₜ₎, und dabei Ermitteln derjenigen Radarobjekte ROₖ(t)*, für die gilt: RSₖ(t) = RS_{FROi*}, wobei bei Vorliegen dieser Bedingung unterstellt wird, dass für die Radarobjekte gilt: ROₖ(t)* = FROᵢ* und für Positionen P_{ROk(t)*} der Radarobjekte ROₖ(t)* gilt: P_{ROk(t)*} = P_{FROi*}. In einem siebten Schritt **207** erfolgt auf Basis der Radardaten ein Ermitteln der relativen Positionen ΔP_{Ok(t)*} der jeweiligen Radarobjekte ROₖ(t)* zu dem Fahrzeug. In einem achten Schritt **208** erfolgt auf Basis jeweils der Positionen P_{ROk(t)*} und der relativen Positionen ΔP_{Ok(t)*} ein Ermitteln einer zweiten Position P2(t) des Fahrzeugs. In einem neunten Schritt **209** wird die erste Position P1(t) des Fahrzeugs auf Basis der ermittelten zweiten Position P2(t) korrigiert und/oder eine Positionswarnung ausgegeben, wenn die erste Position P1(t) und die zweite Position P2(t) um mehr als ein vorgegebener Grenzwert voneinander abweichen.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann.

### Bezugszeichenliste

- 101: erstes Mittel
- 102: zweites Mittel
- 103: drittes Mittel
- 104: Radarsystem
- 201 - 209: Verfahrensschritte

## Patentansprüche

1. Vorrichtung zur Positionsbestimmung eines Fahrzeugs, das sich auf der Erdoberfläche in einem Verkehrswegenetz bewegt, umfassend:
- ein erstes Mittel (101) zur Bestimmung einer ersten Position P1(t) des Fahrzeugs,
- ein zweites Mittel (102) zur Bestimmung einer Bewegungsrichtung BR(t) des Fahrzeugs,
- ein drittes Mittel (103) zur Bereitstellung einer Anzahl n von Fixpunktdaten, wobei die Fixpunktdaten zumindest für auf der Erdoberfläche ortsfest angeordnete signifikante Radarobjekte FROᵢ deren Radarsignatur RS_{FROi} und deren Position P_{FROi} angeben, mit i = 1, 2, ..., n,
- ein Radarsystem (104) mit einem am Fahrzeug angeordneten Radarsensor zur Abtastung einer aktuellen Umgebung des Fahrzeugs mittels Radarstrahlung und zur kontinuierlichen Erfassung dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelbar sind, mit k = 0, 1, 2, ..., m, und wobei das Radarsystem (104) derart ausgeführt und eingerichtet ist, dass
∘ in den Fixpunktdaten abhängig von der ersten Position P1(t) aus den Radarobjekten FROᵢ diejenigen Radarobjekte FROᵢ* mit den zugehörigen Radarsignaturen RS_{FRoi*} und Positionen P_{FROi*} ermittelbar sind, deren Positionen P_{FROi}* in einem vorgebbaren von der Bewegungsrichtung BR(t) abhängigen Bereich um die aktuelle erste Position P1(t) des Fahrzeugs liegen, wobei die Fixpunktdaten auf Basis von Radardaten erzeugt sind, in denen die Erdoberfläche und die darauf angeordneten Radarobjekte FROᵢ in Aufsicht abgebildet sind und anschließend die in den Radardaten in Aufsicht erfassten Radarsignaturen der Radarobjekte FROᵢ in Radarsignaturen RS_{FROi} umgewandelt sind, die die Radarobjekte ROₖ(t) in Seitenansicht zeigen,
∘ die Radarsignaturen RS_{FROi*} der Radarobjekte FROᵢ* mit den Radarsignaturen RSₖ(t) der Radarobjekte ROₖ(t) verglichen werden, und dabei diejenigen Radarobjekte ROₖ(t)* ermittelbar sind, für die gilt: RSₖ(t) = RS_{FROi*}, wobei bei Vorliegen dieser Bedingung unterstellt wird, dass für die Radarobjekte gilt: ROₖ(t)* = FROᵢ* und für Positionen P_{ROk(t)*} der Radarobjekte ROₖ(t)* gilt: P_{ROk(t)*} = P_{FFOi*},
∘ auf Basis der Radardaten die relativen Positionen ΔP_{Ok(t)*} der jeweiligen Radarobjekte ROₖ(t)* zu dem Fahrzeug ermittelt werden, und
∘ auf Basis jeweils der Positionen P_{ROk(t)*} = P_{FROi*} und der relativen Positionen ΔP_{Ok(t)*} eine zweite Position P2(t) des Fahrzeugs ermittelt wird,
wobei das erste Mittel (101) derart ausgeführt und eingerichtet ist, dass die erste Position P1(t) des Fahrzeugs auf Basis der ermittelten zweiten Position P2(t) korrigiert und/oder eine Positionswarnung ausgegeben wird, wenn die erste Position P1(t) und die zweite Position P2(t) um mehr als ein vorgegebener Grenzwert voneinander abweichen.

2. Vorrichtung nach Anspruch 1,
**dadurch gekennzeichnet, dass** das erste Mittel (101) ein satellitenbasiertes und/oder trägheitsbasiertes Positionsermittlungssystem ist.

3. Vorrichtung nach einem der Ansprüche 1 bis 2,
**dadurch gekennzeichnet, dass** die in den Fixpunktdaten enthaltenen Angaben zu den Positionen P_{FROi} der Radarobjekte FROᵢ eine Positionsgenauigkeit im Bereich von < 50 cm, < 30 cm, < 25 cm, < 10 cm, oder < 5 cm aufweisen.

4. Vorrichtung nach einem der Ansprüche 1 bis 3,
**dadurch gekennzeichnet, dass**
- die Fixpunktdaten für zumindest einige signifikante Radarobjekte FROᵢ optische Daten ODᵢ umfassen, die die entsprechenden Radarobjekte FROᵢ optisch kennzeichnen,
- das Radarsystem (104) einen optischen Sensor zur kontinuierlichen Erfassung von Bilddaten BD(t) der aktuellen Umgebung des Fahrzeugs aufweist, und
- das Radarsystem (104) derart ausgeführt und eingerichtet ist, dass die Bilddaten BD(t) zur Verifikation von in der aktuellen Umgebung des Fahrzeugs erkannten Radarobjekte ROₖ(t) verwendet werden.

5. Fahrzeug, insbesondere ein Kraftfahrzeug, mit einer Vorrichtung gemäß einem der Ansprüche 1 bis 4.

6. Verfahren zur Positionsbestimmung eines Fahrzeugs, das sich auf der Erdoberfläche in einem Verkehrswegenetz bewegt, mit folgenden Schritten:
- Bestimmen (201) einer ersten Position P1(t) des Fahrzeugs,
- Bestimmen (202) einer Bewegungsrichtung BR(t) des Fahrzeugs,
- Bereitstellen (203) einer Anzahl n von Fixpunktdaten, wobei die Fixpunktdaten zumindest für auf der Planetenoberfläche ortsfest angeordnete signifikante Radarobjekte FROᵢ deren Radarsignatur RS_{FROi} und deren Position P_{FROi} angeben, mit i = 1, 2,..., n,
- durch ein am Fahrzeug angeordnetes Radarsystem Abtasten (204) einer aktuellen Umgebung des Fahrzeugs mittels Radarstrahlung und kontinuierliches Erfassen (204) dabei gewonnener Radardaten, wobei aus den Radardaten für eine Anzahl m von in der Umgebung vorhandenen Radarobjekten ROₖ(t) deren Radarsignaturen RSₖ(t) und deren relative Positionen ΔP_{Ok(t)} zum Fahrzeug ermittelt werden, mit k = 0, 1, 2, ..., m,
- in den Fixpunktdaten abhängig von der ersten Position P1(t) aus den Radarobjekten FROᵢ Ermitteln (205) derjenigen Radarobjekte FROᵢ* mit den zugehörigen Radarsignaturen RS_{FRoi*} und Positionen P_{FROi*,} deren Positionen P_{FROi}* in einem vorgebbaren von der Bewegungsrichtung BR(t) abhängigen Bereich um die aktuelle erste Position P1(t) des Fahrzeugs liegenden, wobei die Fixpunktdaten auf Basis von Radardaten erzeugt sind, in denen die Erdoberfläche und die darauf angeordneten Radarobjekte FROᵢ in Aufsicht abgebildet sind und anschließend die in den Radardaten in Aufsicht erfassten Radarsignaturen der Radarobjekte FROᵢ in Radarsignaturen RS_{FROi} umgewandelt sind, die die Radarobjekte ROₖ(t) in Seitenansicht zeigen,
- Vergleichen (206) der Radarsignaturen RS_{FROi*} der Radarobjekte FROᵢ* mit den Radarsignaturen RSₖ(t) der Radarobjekte ROₖ₍ₜ₎, und dabei Ermitteln derjenigen Radarobjekte ROₖ(t)*, für die gilt: RSₖ(t) = RS_{FROi*,} wobei bei Vorliegen dieser Bedingung unterstellt wird, dass für die Radarobjekte gilt: ROₖ(t)* = FROᵢ* und für Positionen P_{ROk(t)*} der Radarobjekte ROₖ(t)* gilt: P_{ROk(t)*} = P_{FROi*},
- auf Basis der Radardaten Ermitteln (207) der relativen Positionen ΔP_{Ok(t)*} der jeweiligen Radarobjekte ROₖ(t)* zu dem Fahrzeug, und
- auf Basis jeweils der Positionen P_{ROk(t)*} und der relativen Positionen ΔP_{Ok(t)*} Ermitteln (208) einer zweiten Position P2(t) des Fahrzeugs,
wobei die erste Position P1(t) des Fahrzeugs auf Basis der ermittelten zweiten Position P2(t) korrigiert (209) wird und/oder eine Positionswarnung ausgegeben (209) wird, wenn die erste Position P1(t) und die zweite Position P2(t) um mehr als ein vorgegebener Grenzwert voneinander abweichen.

7. Verfahren nach Anspruch 6
**dadurch gekennzeichnet, dass** die Radardaten, in denen die Erdoberfläche und die darauf angeordneten Radarobjekte FROᵢ in Aufsicht abgebildet sind, durch einen flugzeuggetragenen oder einen satellitengetragenen Radarsensor erfasst werden.

8. Verfahren nach einem der Ansprüche 6 bis 7,
**dadurch gekennzeichnet, dass**
- die bereitgestellten Fixpunktdaten für zumindest einige signifikante Radarobjekte FROᵢ optische Daten ODᵢ umfassen, die die entsprechenden Radarobjekte FROᵢ optisch kennzeichnen,
- mit einem optischen Sensor kontinuierlich Bilddaten BD(t) der aktuellen Umgebung des Fahrzeugs erfasst werden, und
- die Bilddaten BD(t) zur Verifikation von in der aktuellen Umgebung des Fahrzeugs erkannten Radarobjekten ROₖ(t) verwendet werden.

9. Computersystem, mit einer Datenverarbeitungsvorrichtung, wobei die Datenverarbeitungsvorrichtung derart ausgestaltet ist, dass durch die Datenverarbeitungsvorrichtung bewirkt wird, dass die Vorrichtung nach einem der Ansprüche 1 bis 5 die Verfahrensschritte nach einem der Ansprüche 6 bis 8 ausführt.

10. Computer-Programm-Produkt mit auf einem maschinenlesbaren Träger gespeicherten Programmcode zur Durchführung des Verfahrens nach einem der Ansprüche 6 bis 8 mit der Vorrichtung nach einem der Ansprüche 1 bis 5, wenn der Programmcode auf einer Datenverarbeitungsvorrichtung ausgeführt wird.

11. Digitales Speichermedium mit elektronisch auslesbaren Steuersignalen, wobei die Steuersignale so mit einem programmierbaren Computersystem zusammenwirken, dass die Vorrichtung nach einem der Ansprüche 1 bis 5 die Verfahrensschritte nach einem der Ansprüche 6 bis 8 ausführt.

12. Computer-Programm mit Programmcodes zur Durchführung des Verfahrens nach einem der Ansprüche 6 bis 8 mit der Vorrichtung nach einem der Ansprüche 1 bis 5, wenn das Programm auf einer Datenverarbeitungsvorrichtung abläuft.

## Claims

1. A device for determining the position of a vehicle that moves on the earth's surface in a network of traffic routes, comprising:
- a first means (101) for purposes of determining a first position P1(t) of the vehicle,
- a second means (102) for purposes of determining a direction of movement BR(t) of the vehicle,
- a third means (103) for purposes of providing a number n of fixed point data, wherein
the fixed point data specify, at least for significant radar objects FROᵢ arranged at fixed points on the earth's surface, their radar signature RS_{FROi} and their position P_{FROi}, where i = 1, 2, ..., n,
- a radar system (104), with a radar sensor arranged on the vehicle for purposes of scanning a current environment of the vehicle by means of radar radiation, and for purposes of continuous detection of radar data thereby obtained, wherein from the radar data for a number m of radar objects ROₖ(t) present in the environment, whose radar signatures RSₖ(t) and whose positions ΔP_{Ok(t)} relative to the vehicle can be determined, where k = 0, 1, 2, ... m, and wherein
the radar system (104) is embodied and equipped such that
o in the fixed point data, as a function of the first position P1(t), from the radar objects FROᵢ, those radar objects FROᵢ* with the associated radar signatures RS_{FROi*} and positions P_{FROi}* can be determined, whose positions P_{FROi}* lie in a precribable region about the current first position P1(t) of the vehicle, which is dependent on the direction of movement BR(t), wherein
the fixed point data are generated on the basis of radar data, in which the earth's surface and the radar objects FROᵢ thereon arranged are mapped in plan view, and the radar signatures of the radar objects FROᵢ recorded in the radar data in plan view are subsequently converted into radar signatures RS_{FROi}, which show the radar objects ROₖ(t) in side view,
o the radar signatures RS_{FROi*} of the radar objects FROᵢ* are compared with the radar signatures RSₖ(t) of the radar objects ROₖ(t), and thereby those radar objects ROₖ(t)* can be determined, for which the following applies: RSₖ(t) = RS_{FROi*}, wherein if this condition is met, it is assumed that for the radar objects the following applies: ROₖ(t)* = FROᵢ*, and for positions P_{ROk(t)*} of the radar objects ROₖ(t)* the following applies: P_{ROk(t)*} = P_{FROi*}.
∘ on the basis of the radar data the positions ΔP_{Ok(t)*} of the respective radar objects ROₖ(t)* relative to the vehicle are determined, and
∘ on the basis in each case of the positions P_{ROk(t)*} = P_{FROi}* and the relative positions ΔP_{Ok(t)*}, a second position P2(t) of the vehicle is determined, wherein
the first means (101) is embodied and equipped such that the first position P1(t) of the vehicle is corrected on the basis of the second position P2(t) determined, and/or a position warning is outputted, if the first position P1(t) and the second position P2(t) deviate from one another by more than a prescribed limiting value.

2. The device in accordance with claim 1,
**characterised in that**,
the first means (101) is a satellite-based and/or inertia-based position determination system.

3. The device in accordance with one of the claims 1 to 2,
**characterised in that**,
the details contained in the fixed point data regarding the positions P_{FROi} of the radar objects FROᵢ have a positional accuracy in the range of < 50 cm, < 30 cm, < 25 cm, < 10 cm, or < 5 cm.

4. The device in accordance with one of the claims 1 to 3,
**characterised in that**,
- the fixed point data for at least some significant radar objects FRO, comprise optical data OD, which optically identify the corresponding radar objects FRO,
- the radar system (104) has an optical sensor for the continuous recording of image data BD(t) of the current environment of the vehicle, and
- the radar system (104) is embodied and equipped such that the image data BD(t) are used to verify radar objects ROk(t) detected in the current environment of the vehicle.

5. A vehicle, in particular a motor vehicle, with a device in accordance with one of the claims 1 to 4.

6. A method for determining the position of a vehicle that moves on the earth's surface in a network of traffic routes, with the following steps:
- determination (201) of a first position P1(t) of the vehicle,
- determination (202) of a direction of movement BR(t) of the vehicle,
- provision (203) of a number n of fixed point data, wherein
the fixed point data, at least for significant radar objects FROᵢ arranged at fixed points on the planet's surface, specify their radar signature RS_{FROi} and their position P_{FROi}, where i = 1, 2, ..., n,
- by a radar system arranged on the vehicle, scanning (204) of a current environment of the vehicle by means of radar radiation, and continuous recording (204) of radar data thereby obtained, wherein
from the radar data for a number m of radar objects ROₖ(t) present in the environment, whose radar signatures RSₖ(t) and whose positions ΔP_{Ok(t)} relative to the vehicle are determined, where k = 0, 1, 2, ..., m,
- in the fixed point data as a function of the first position P1(t) from the radar objects FROᵢ, determination (205) of those radar objects FROᵢ* with the associated radar signatures RS_{FROi*} and positions P_{FROi*}, whose positions P_{FROi}* lie in a prescribable region about the current first position P1(t) of the vehicle, which region depends on the direction of movement BR(t), wherein
the fixed point data are generated on the basis of radar data, in which the earth's surface and the radar objects FROᵢ arranged thereon are mapped in plan view, and the radar signatures of the radar objects FROᵢ recorded in the radar data in plan view are subsequently converted into radar signatures RS_{FROi}, which show the radar objects ROₖ(t) in side view,
- comparison (206) of the radar signatures RS_{FROi*} of the radar objects FROᵢ* with the radar signatures RSₖ(t) of the radar objects ROₖ₍ₜ₎, and thereby the determination of those radar objects ROₖ(t)* for which the following applies: RSₖ(t) = RS_{FROi*}, wherein
if this condition is met, it is assumed that for the radar objects the following applies: ROₖ(t)* = FROᵢ* and for positions P_{ROk(t)*} of the radar objects ROₖ(t)* the following applies: P_{ROk(t)*} = P_{FROi*},
- on the basis of the radar data, determination (207) of the positions ΔP_{Ok(t)*} of the respective radar objects ROₖ(t)* relative to the vehicle, and
- on the basis in each case of the positions P_{ROk(t)*} and the relative positions ΔP_{Ok(t)*}, determination (208) of a second position P2(t) of the vehicle, wherein
the first position P1(t) of the vehicle is corrected (209) on the basis of the second position P2(t) determined, and/or a position warning is outputted (209) if the first position P1(t) and the second position P2(t) differ from one another by more than a prescribed limiting value.

7. The method in accordance with claim 6,
**characterised in that**,
the radar data, in which the earth's surface and the radar objects FROᵢ arranged on it are mapped in plan view, are recorded by an aircraft-borne or a satellite-borne radar sensor.

8. The method in accordance with one of the claims 6 to 7,
**characterised in that**,
- the fixed point data provided for at least some significant radar objects FROᵢ comprise optical data ODᵢ which optically identify the corresponding radar objects FROᵢ,
- with an optical sensor image data BD(t) of the current environment of the vehicle are continuously recorded, and
- the image data BD(t) are used to verify radar objects ROₖ(t) detected in the current environment of the vehicle.

9. A computer system with a data processing device,
wherein
the data processing device is configured such that by means of the data processing device it is effected that the device in accordance with one of the claims 1 to 5 executes the method steps in accordance with one of the claims 6 to 8.

10. A computer program product with program code stored on a machine-readable carrier for purposes of executing the method in accordance with one of the claims 6 to 8 with the device in accordance with one of the claims 1 to 5 if the program code is executed on a data processing device.

11. A digital storage medium with electronically readable control signals, wherein
the control signals interact with a programmable computer system such that the device in accordance with one of the claims 1 to 5 executes the process steps in accordance with one of the claims 6 to 8.

12. A computer program with program codes for purposes of executing the method in accordance with one of the claims 6 to 8 with the device in accordance with one of the claims 1 to 5 if the program runs on a data processing device.

## Revendications

1. Dispositif de détermination de la position d'un véhicule, qui se déplace sur la surface terrestre dans un réseau routier de circulation, comprenant :
- un premier moyen (101) pour la détermination d'une première position P1(t) du véhicule,
- un deuxième moyen (102) pour la détermination d'une direction de déplacement BR(t) du véhicule,
- un troisième moyen (103) pour la fourniture d'un nombre n de données de point fixe, les données de point fixe indiquant au moins pour les objets radar significatifs FROᵢ disposés fixement sur la surface terrestre, la signature radar RS_{FROi} de ceux-ci et la position P_{FROi} de ceux-ci, avec i = 1, 2, ..., n,
- un système radar (104) avec un capteur radar disposé sur le véhicule pour l'exploration d'un environnement actuel du véhicule au moyen d'un rayonnement radar et pour la saisie continue des données radar acquises à cet effet, les signatures radar RSₖ(t) de celles-ci et les positions relatives ΔP_{Ok(t)} de celles-ci pouvant être déterminées par rapport au véhicule à partir des données radar pour un nombre m d'objets radar ROₖ(t) existant dans l'environnement, avec k = 0, 1, 2, ..., et
le système radar (104) étant constitué et aménagé de telle sorte que
∘ dans les données de point fixe, en fonction de la première position P1(t), peuvent être déterminés à partir des objets radar FROᵢ, les objets radar FROᵢ* avec les signatures radar RS_{FROi*} et les positions P_{FROi} correspondantes, dont les positions P_{FROi}* se situent dans une plage prédéfinissable en fonction de la direction de déplacement BR(t) autour de la première position actuelle P1(t) du véhicule,
les données de point fixe étant générées sur la base des données radar dans lesquelles la surface terrestre et les objets radar FROᵢ disposés dessus sont reproduits en surveillance et les signatures radar des objets radar FROᵢ saisies en surveillance dans les données radar étant ensuite converties en signatures radar RS_{FROi}, qui affichent les objets radar ROₖ(t) en vue de côté,
∘ les signatures radar RS_{FROi*} des objets radar FROᵢ* étant comparées aux signatures radar RSₖ(t) des objets radar ROₖ₍ₜ₎, et peuvent être déterminées à cet effet les objets radar ROₖ(t)* pour lesquels : RSₖ(t) = RS_{FROi}*, étant admis en présence de cette condition, que pour les objets radar on a : ROₖ(t) * = FROᵢ* et pour les positions P_{ROk(t)*} des objets radar ROₖ(t)*, on a : P_{ROk(t)*}=P_{FROi*},
∘ les positions relatives ΔP_{Ok(t)*} des objets radar ROₖ(t)* respectifs étant déterminées par rapport au véhicule sur la base des données radar, et
∘ une deuxième position P2(t) du véhicule étant déterminée respectivement sur la base des positions relatives P_{ROk(t)*} = P_{FROi}* et des positions relatives ΔP_{Ok(t)*},
le premier moyen (101) étant réalisé et aménagé de telle sorte que la première position P1(t) du véhicule est corrigée sur la base de la deuxième position déterminée P2(t) et/ou un avertissement de position est émis, lorsque la première position P1(t) et la deuxième position P2(t) s'écartent l'une de l'autre de plus d'une valeur limite prédéfinie.

2. Dispositif selon la revendication 1, **caractérisé en ce que** le premier moyen (101) est un système de détermination de position à base de satellite et/ou à base d'inertie.

3. Dispositif selon l'une quelconque des revendications 1 à 2, **caractérisé en ce que** les indications contenues dans les données de point fixe par rapport aux positions P_{FROi} des objets radar FROᵢ comportent une précision de position de l'ordre de < 50 cm, <30 cm, <25 cm, <10 cm ou < 5 cm.

4. Dispositif selon l'une quelconque des revendications 1 à 3, **caractérisé en ce que**
- les données de point fixe pour au moins plusieurs objets radar significatifs FROᵢ, comprennent des données optiques ODᵢ, qui identifient optiquement les objets radar correspondants FROᵢ,
- le système radar (104) comporte un capteur optique pour la saisie continue de données-images BD(t) de l'environnement actuel du véhicule, et
- le système radar (104) est réalisé et aménagé de telle sorte que les données-images BD(t) sont utilisées pour la vérification des objets radar ROₖ(t) identifiés dans l'environnement actuel du véhicule.

5. Véhicule, notamment véhicule automobile, avec un dispositif selon l'une quelconque des revendications 1 à 4.

6. Procédé pour la détermination de la position d'un véhicule, qui se déplace sur la surface terrestre dans un réseau routier de circulation, avec les étapes suivantes :
- détermination (201) d'une première position P1(t) du véhicule,
- détermination (202) d'une direction de déplacement BR(t) du véhicule,
- fourniture (203) d'un nombre n de données de point fixe, les données de point fixe indiquant au moins pour les objets radar FROᵢ significatifs disposés fixement sur la surface de planète, la signature radar RS_{FROi} de ceux-ci et la position P_{FROi} de ceux-ci, avec i = 1, 2, ..., n
- grâce à un système radar disposé sur le véhicule, exploration (204) d'un environnement actuel du véhicule au moyen du rayonnement radar et de la saisie continue (204) des données radar acquises à cet effet, les signatures radar RSₖ(t) de celles-ci et les positions relatives ΔP_{Ok(t)} de celles-ci par rapport au véhicule étant déterminées à partir des données radar pour un nombre m d'objets radar ROₖ(t) existant dans l'environnement, avec k = 0, 1, 2, ..., m,
- dans les données de point fixe en fonction de la première position P1(t), détermination (205) à partir des objets radar FROᵢ des objets radar FROᵢ* avec les signatures radar RS_{FROi}* et les positions P_{FROi}* correspondantes, dont les positions P_{FROi}* se situent dans une plage prédéfinissable en fonction de la direction de déplacement BR(t) autour de la première position actuelle P1(t) du véhicule, les données de point fixe étant produites sur la base des données radar, dans lesquelles la surface terrestre et les objets radar disposés dessus FROᵢ sont reproduits en surveillance et les signatures radar des objets radar FROᵢ saisies en surveillance dans les données radar étant converties en signatures radar RS_{FROi} qui affichent les objets radar ROₖ(t) en vue de côté,
- comparaison (206) des signatures radar RS_{FROi*} des objets radar FROᵢ* aux signatures radar RSₖ(t) des objets radar ROₖ(t) et détermination à cet effet des objets radar ROₖ(t)*, pour lesquels on a : RSₖ(t) = RS_{FROi}*, étant admis en présence de cette condition, que pour les objets radar on a : ROₖ(t)* = FROᵢ* et pour les positions P_{ROk(t)*} des objets radar ROₖ(t)*, on a : P_{ROk(t)*} = P_{FROi*},
- détermination (207) sur la base des données radar des positions relatives ΔP_{Ok(t)*} des objets radar respectifs ROₖ(t)* par rapport au véhicule, et
- détermination (208) sur la base respectivement des positions P_{ROk(t)*} et des positions relatives ΔP_{OK(t)*} d'une deuxième position P2(t) du véhicule, la première position P1(t) du véhicule étant corrigée (209) sur la base de la deuxième position P2(t) déterminée et/ou un avertissement de position étant émis (209), lorsque la première position P1(t) et la deuxième position P2(t) s'écartent l'une de l'autre de plus d'une valeur limite prédéfinie.

7. Procédé selon la revendication 6, **caractérisé en ce que** les données de radar, dans lesquelles la surface terrestre et les objets radar disposés dessus FROᵢ sont reproduits en surveillance, sont saisies par un capteur radar embarqué sur avion ou sur satellite.

8. Procédé selon l'une quelconque des revendications 6 à 7, **caractérisé en ce que**
- les données de point fixe fournies pour au moins plusieurs objets radar significatifs FROᵢ, comprennent des données optiques ODᵢ, qui identifient optiquement les objets radar correspondants FROᵢ,
- des données-images BD(t) de l'environnement actuel du véhicule sont saisies en continu avec un capteur optique, et
- les données-images BD(t) sont utilisées pour la vérification des objets radar ROₖ(t) identifiées dans l'environnement actuel du véhicule.

9. Système informatisé, avec un dispositif de traitement des données, le dispositif de traitement des données étant constitué de telle sorte que grâce à l'action du dispositif de traitement des données, le dispositif selon l'une quelconque des revendications 1 à 5 exécute les étapes du procédé selon l'une quelconque des revendications 6 à 8.

10. Produit de programme informatisé avec un code de programme mémorisé sur un support lisible par machine pour l'exécution du procédé selon l'une quelconque des revendications 6 à 8 avec le dispositif selon l'une quelconque des revendications 1 à 5, lorsque le code de programme est exécuté sur un dispositif de traitement des données.

11. Moyen de mémorisation numérique avec des signaux de commande lisibles électroniquement, les signaux de commande coopérant avec un système informatique programmable de telle sorte que le dispositif selon l'une quelconque des revendications 1 à 5 exécute les étapes de procédé selon l'une quelconque des revendications 6 à 8.

12. Programme informatique avec des codes de programme pour exécution du procédé selon l'une quelconque des revendications 6 à 8 avec le dispositif selon l'une quelconque des revendications 1 à 5, lorsque le programme se déroule sur un dispositif de traitement des données.
